# FASCICULE DE BREVET EUROPEEN

(11) **EP 2 489 259 B1**
(45) Date de publication et mention de la délivrance du brevet: **05.06.2013**
(21) Numéro de dépôt: 12305178.1
(22) Date de dépôt: 16.02.2012
(51) Int. Cl.: A01K 7/00, A01K 5/01

(54) **Dispositif d'abreuvoir**
Tränkvorrichtung
Drinking trough device

(30) Priorité: 16.02.2011 FR 1151258; 14.03.2011 FR 1152031
(43) Date de publication de la demande: 22.08.2012
(73) Titulaire: La Buvette, 08090 Tournes (FR)
(72) Inventeur: Bousquet, Jean-Philippe, 51480 Belval-sous-Chatillon (FR)
(74) Mandataire: Rhein, Alain

(56) Documents cités:
- WO-A1-00/38506
- GB-A- 2 361 401
- US-A- 1 881 065
- US-A- 2 574 174
- US-A- 5 809 934

## Description

La présente invention entre dans le domaine de l'agriculture et de l'élevage, plus particulièrement dans l'abreuvement des animaux d'élevage.

L'invention concerne un dispositif d'abreuvoir pour animal d'élevage.

L'abreuvement d'animaux d'élevage, en particulier en intérieur, nécessite la mise en place d'un abreuvoir d'une capacité et de forme adaptées en fonction du type et du nombre d'animaux. De tels abreuvoirs comprennent un fond surmonté de parois latérales, définissant une enceinte destinée à être remplie d'eau potable. Pour ce faire, ledit abreuvoir est relié à un réseau d'approvisionnement en eau par l'intermédiaire d'une robinetterie.

On notera que de tels abreuvoirs sont souvent suspendus par rapport au sol, accrochés au mur le long de l'une de leur paroi longitudinal. Un exemple connu d'un tel abreuvoir est décrit dans le document US 1 881 065.

Un autre exemple consiste à simplement suspendre au mur un seau par sa hanse, au travers d'une pate de fixation, comme décrit dans le document US 3 578 205. Toutefois, lorsque l'animal s'abreuve ou mange, la fixation amovible reste précaire et le seau bouge, susceptible de tomber au sol.

Par ailleurs, un type d'abreuvoir spécifique et communément utilisé en intérieur présente un bac inférieur dont les parois arrière et latérales remontent verticalement de manière à servir de support à un surplomb s'étendant horizontalement. On notera que les parois latérales sont entretoisées l'une avec l'autre. Dès lors, en face avant, une ouverture est ménagée pour le passage de la tête de l'animal qui vient s'abreuver. Ledit bac s'étend au sol sur une largeur plus importante que le surplomb, conférant à l'abreuvoir une forme générale en G. Un tel abrevoir est décrit dans le document US 5 809 934.

Un tel abreuvoir est fixé à une paroi murale du bâtiment d'élevage. Cette fixation s'effectue au niveau de la face arrière, de sorte que l'ouverture de l'abreuvoir soit dans un plan sensiblement parallèle avec celui du mur. Plus précisément, la fixation sur le mur s'effectue par l'intermédiaire d'équerres, notamment sous forme d'un rail conformé en L, dont une des ailes est fixée à une paroi latérale dudit abreuvoir tandis que l'autre aile est solidarisée sur la paroi murale.

Dès lors, lorsqu'un animal vient boire, il se place en biais ou perpendiculairement par rapport à l'abreuvoir, et donc par rapport au mur. Cette position de l'animal prend un espace non négligeable et gêne le passage des autres animaux. En particulier, dans le cas d'un bâtiment d'élevage de bovins pourvu de logettes alignées, un passage pour que les bêtes viennent s'abreuver est prévu à l'arrière et le long desdites logettes : en position d'abreuvement, un animal empêche alors le passage des autres animaux.

De plus, un tel abreuvoir constitue un obstacle saillant par rapport à la paroi murale, que les animaux doivent contourner, risquant de se cogner en se blessant ou endommageant le matériel.

L'abreuvoir décrit dans le document US 1 881 065 est un exemple simplifié présentant tout les désavantages précédemment mentionnés.

Enfin, dans cette configuration, l'approvisionnement en eau peut être problématique. En effet, la robinetterie intérieure présente une jonction en face latérale, de sorte qu'un branchement complexe doit être mis en place pour effectuer le raccordement à l'adduction d'eau située le long du mur. Par ailleurs, ces éléments sont accessibles aux animaux qui peuvent l'endommager. Une solution consisterait à effectuer la jonction au niveau de la face arrière accolée au mur, opération complexe et nécessitant une modification conséquente de la structure de l'abreuvoir.

Pour pallier ces inconvénients, il a été envisagé de positionner l'abreuvoir de sorte que l'ouverture s'étende selon un plan orthogonal par rapport audit mur. Toutefois, une telle disposition de l'abreuvoir augmente son emprise au sol, constituant un obstacle encore plus difficile à contourner. De plus, l'arrière de l'abreuvoir, notamment l'angle entre la face arrière et la face latérale située le plus loin du mur, est souvent cognée par les animaux, qui se blessent, encore plus dans le cas de bovins dont les cornes tapent ledit angle.

On notera que d'autres abreuvoirs connus permettent de les positionner dans les angles au niveau de la jonction de deux murs, comme décrit dans le document GB 2 361 401 divulguant un support de forme tétraédrique, la pointe vers le bas, supportant en partie haute un abreuvoir triangulaire, les bords supérieurs étant arrondis, afin d'éviter tout risque de blessure de l'animal. Un autre exemple est décrit dans le document US 4 757 784 divulguant un abreuvoir comprenant un bol tronconique fixé en partie basse à une embase triangulaire disposée au sol de sorte qu'un sommet reçoit ledit bol, tandis que le côté opposé est accolé au mur. Ces deux documents n'ont aucun rapport avec l'invention et le but présentement recherché.

L'invention propose ainsi un dispositif d'abreuvoir pour animal d'élevage à même d'être disposé à l'équerre par rapport à la paroi murale sur laquelle il est fixé, sans constituer une gêne pour le passage des animaux. Pour ce faire, un tel abreuvoir est équipé de moyens de déport et de protection de sa face arrière, à la manière d'une barrière qui guide l'animal, évitant qu'il ne se cogne. De plus, ces moyens contribuent à protéger la robinetterie et les moyens d'approvisionnement en eau, dont la jonction est alors située entre la paroi latérale et le mur, empêchant ainsi son accès aux animaux.

Le dispositif d'abreuvoir pour animal d'élevage selon l'invention est constitué d'une enceinte comprenant, d'une part, un bac surmonté d'une paroi arrière et d'une première et d'une seconde parois latérales, s'étendant parallèlement de part et d'autre de ladite paroi arrière, une ouverture étant

ménagée en face avant pour le passage de l'animal lorsqu'il vient s'abreuver et, d'autre part, de moyens de fixation sur une paroi murale au niveau et le long de ladite paroi latérale, de manière à orienter ledit abreuvoir perpendiculairement par rapport à la paroi murale, caractérisé par le fait qu'il comprend des moyens de déport et de protection de la paroi arrière rendus solidaires, à une première extrémité, de ladite paroi arrière au niveau du bord opposé à ladite paroi latérale et pourvus, à la seconde extrémité opposée, de moyens de solidarisation avec ladite paroi murale, lesdits moyens de déport constituant une surface inclinée constituant une barrière orientée depuis ledit bord opposé de la paroi arrière jusqu'à ladite paroi murale.

Plus particulièrement, lesdits moyens de déport et de protection peuvent être constitués de barres, formant une barrière, que les animaux contournent naturellement.

En outre, un tel abreuvoir permet d'adapter sa fixation dans un coin du bâtiment, sans se soucier de l'angle, pas nécessairement orthogonal entre les parois murales.

D'autres caractéristiques et avantages de l'invention ressortiront de la description détaillée qui va suivre des modes de réalisation non limitatifs de l'invention, en référence aux figures annexées dans lesquelles:
- la figure 1 représente une vue en perspective de trois-quarts avant d'un premier mode de réalisation ; et
- la figure 2 représente une vue similaire d'un second mode de réalisation.

La présente invention concerne un dispositif 1 d'abreuvoir pour animal d'élevage. Un tel abreuvoir 1 est destiné à être placé au sein d'un bâtiment d'élevage, notamment assujetti à au moins une paroi murale (non représentée).

Ledit abreuvoir 1 est constitué d'une enceinte comprenant un bac 2 surmonté d'une paroi arrière 3 et d'au moins une paroi latérale 4. Ledit bac est prévu étanche, formant un réceptacle pour recevoir l'eau destiné à abreuver les animaux. En face avant, une ouverture 7 est ménagée pour le passage de l'animal lorsqu'il vient s'abreuver.

Ledit bac est surmonté d'une paroi arrière 3 et d'une première 4 et d'une seconde 5 parois latérales, s'étendant parallèlement de part et d'autre de ladite paroi arrière. De plus, lesdites parois 3,4,5 peuvent être surmontées d'une paroi supérieure 6, recouvrant au moins partiellement ledit abreuvoir 1.

Par ailleurs, l'enceinte de l'abreuvoir 1 comprend aussi des moyens 8 de fixation de ladite paroi latérale 4 sur la paroi murale.

En effet, l'abreuvoir 1 selon l'invention vient s'assujettir sur une paroi murale au niveau et le long d'une de ses parois latérales 4. Ainsi, l'abreuvoir se retrouve orienté perpendiculairement par rapport au mur, l'ouverture 7 étant dans un plan sensiblement orthogonal par rapport au plan de la paroi murale. Dès lors, les animaux viennent boire en s'alignant le long du mur.

Lesdits moyens de fixation 8 peuvent se présenter sous la forme d'au moins une équerre ou étai, notamment sous forme d'un profilé ou d'un rail 80 longitudinal conformé sensiblement en L. Un tel rail 80 vient se fixer verticalement le long de l'arête entre la paroi arrière 3 et la paroi latérale 4, notamment au niveau d'éléments de réception 81 prévus à cet effet. Le rail 80 est alors fixé au niveau d'une première aile verticalement le long de ladite arête, par l'intermédiaire dudit élément 81, tandis que l'autre aile peut être solidarisée avec la paroi murale, notamment par vissage et chevillage.

Avantageusement, afin d'éviter que les animaux se cognent contre l'angle saillant de l'abreuvoir 1 ainsi disposé, le dispositif 1 selon l'invention comprend des moyens 9 de déport et de protection. Ces moyens 9 s'étendant en biais depuis l'arrête saillante 10 au niveau de ladite paroi arrière 3 et de la paroi latérale 5, opposée à celle 4 fixée au mur. Ils forment ainsi une barrière inclinée. Cette surface inclinée orientée depuis ledit bord de la paroi arrière 3 jusqu'à ladite paroi murale constitue un guide empêchant les animaux de se cogner contre la face arrière 3 de l'abreuvoir 1, de se blesser ou de l'endommager.

Pour ce faire, lesdits moyens 9 sont rendus solidaires, à une première extrémité 11, de ladite paroi arrière 3 au niveau du bord opposé de ladite paroi latérale 4. A la seconde extrémité opposée, les moyens 9 comprennent des moyens 12 de solidarisation avec ladite paroi murale.

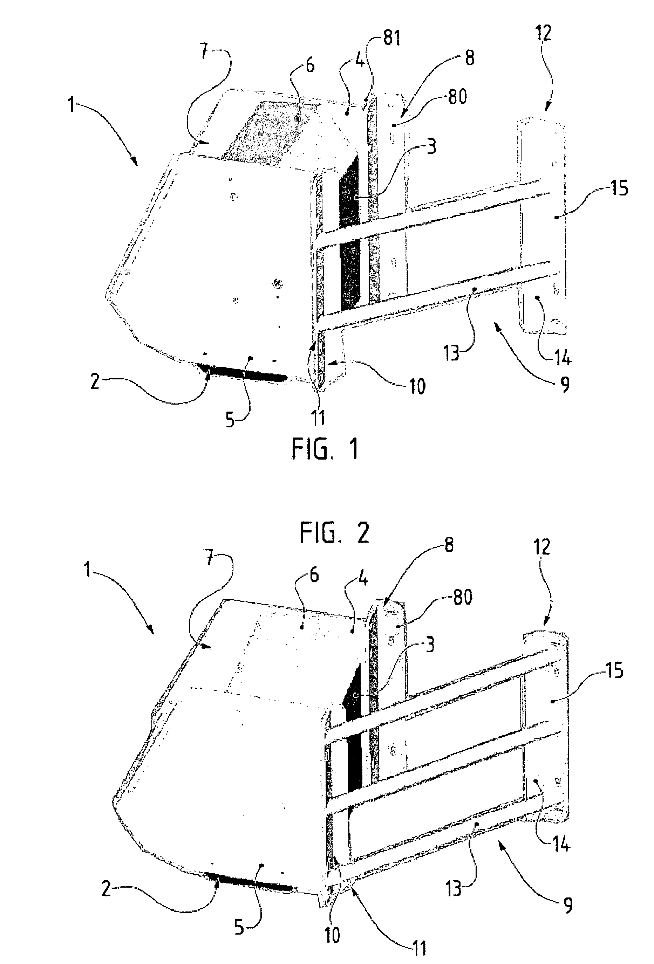

Plus particulièrement, lesdits moyens de déport et de protection 9 peuvent se présenter sous la forme d'au moins deux barres 13 s'étendant longitudinalement depuis ledit bord jusqu'auxdits moyens de solidarisation 12. Selon le mode de réalisation visible sur la figure 1, les barres 13 sont au nombre de deux, tandis que sur le mode de réalisation représenté sur la figure 2, elles sont au nombre de trois.

Selon le mode préférentiel de réalisation lesdites barres 13 sont parallèles entre elles. Leurs extrémités respectives sont alors espacées, solidarisées et supportées par les moyens de solidarisation 12 et la jonction avec le bord.

Selon un autre mode de réalisation, non représenté, lesdits moyens de déport et de protection 9 peuvent se présenter sous la forme d'une plaque ou d'une tôle, ajourées ou non, d'un treillis ou d'un maillage, ou bien d'une combinaison de ces différents éléments, agencés et solidarisés entre eux, de manière à constituer une barrière inclinée comme précédemment mentionné.

On notera que lesdits moyens de solidarisation 12 peuvent être similaires aux moyens de fixation 8. En particulier, ils peuvent se présenter sous la forme d'au moins un profilé sous forme d'une équerre 14 dont une aile 15 est solidaire de ladite seconde extrémité et conformée de manière à être accolée à ladite paroi murale.

Dès lors, la barrière formée par les moyens de déport et de protection 9 permet de protéger l'éventuel raccord avec la robinetterie pour l'approvisionnement en eau (non représenté), que les animaux ne peuvent plus atteindre. Il n'est alors plus nécessaire de changer la jonction au niveau de la paroi arrière 3.

Par ailleurs, les profilés de type équerre constituant les moyens de fixation 8, de solidarisation 12 ou la jonction des moyens 9 avec l'arête 10 ou le bord, peuvent être prévues arrondies, avec des orifices de passage des vis de fixation, de manière à modifier l'orientation desdits moyens de déport et de protection 9. Ainsi, l'inclinaison peut être adaptée en fonction de l'espace disponible et de l'angle entre deux parois murales si l'abreuvoir 1 est positionné dans un coin.

Le dispositif 1 selon l'invention permet donc de positionner un abreuvoir avec son ouverture 7 orthogonalement par rapport au mur, sans risque de collision avec les animaux. L'espace quand un animal s'abreuve est donc minimisé, ce dernier s'alignant contre le mur, facilitant le passage des autres animaux.

## Revendications

1. Dispositif (1) d'abreuvoir pour animal d'élevage, constitué d'une enceinte comprenant, d'une part, un bac (2) surmonté d'une paroi arrière (3) et d'une première (4) et d'une seconde (5) parois latérales, s'étendant parallèlement de part et d'autre de ladite paroi arrière (3), une ouverture (7) étant ménagée en face avant pour le passage de l'animal lorsqu'il vient s'abreuver et, d'autre part, de moyens (8) de fixation sur une paroi murale au niveau et le long de ladite paroi latérale (4),
**caractérisé par le fait qu'**il comprend des moyens (9) de déport et de protection de la paroi arrière (3) rendus solidaires, à une première extrémité (11), de ladite paroi arrière (3) au niveau du bord opposé à ladite paroi latérale (4) et pourvus, à la seconde extrémité opposée, de moyens (12) de solidarisation avec ladite paroi murale, lesdits moyens (9) de déport constituant une surface inclinée constituant une barrière orientée depuis ledit bord opposé de la paroi arrière (3) jusqu'à ladite paroi murale, de manière à orienter ledit abreuvoir perpendiculairement par rapport à la paroi murale.

2. Dispositif (1) selon la revendication 1, **caractérisé par le fait que** lesdits moyens de déport et de protection (9) se présentent sous la forme d'au moins deux barres (13) s'étendant longitudinalement depuis ledit bord jusqu'auxdits moyens de solidarisation (12).

3. Dispositif (1) selon la revendication 2, **caractérisé par le fait que** lesdites barres (13) sont parallèles entre elles.

4. Dispositif (1) selon l'une quelconque des revendications précédentes, **caractérisé par le fait que** lesdits moyens de solidarisation (12) se présentent sous la forme d'au moins une équerre (14) dont une aile est solidaire de ladite seconde extrémité et conformée de manière à être accolée à ladite paroi murale.

## Patentansprüche

1. Tränkvorrichtung (1) für Zuchttier, bestehend aus einem Behälter, der, einerseits, eine Wanne (2), oberhalb der sich eine Hinterwand (3) und eine erste (4) und eine zweite (5) Seitenwand befinden, welche sich parallel zu einander beiderseits der besagten Hinterwand (3) erstrecken, wobei in der Vorderfläche eine Öffnung (7) für den Durchgang des Tiers, wenn es trinken will, vorgesehen ist, und, andererseits, Mittel (8) zur Befestigung an eine Mauerwand im Bereich und entlang der besagten Seitenwand (4) umfasst, **dadurch gekennzeichnet, dass** sie Mittel (9) zum Versetzen und Schützen der Hinterwand (3) umfasst, die an einem ersten Ende (11) fest mit der besagten Hinterwand (3) im Bereich des der besagten Seitenwand (4) gegenüberliegenden Randes verbunden ist, und an dem zweiten, gegenüberliegenden Rand mit Mitteln (12) versehen ist, um mit der besagten Mauerwand die besagten Mittel zum Versetzen (9) fest zu verbinden, welche eine geneigte Oberfläche bilden, die eine von diesem gegenüberliegenden Rand der Hinterwand (3) bis zu der besagten Mauerwand gerichtete Sperre bildet, sodass die besagte Tränke senkrecht bezüglich der Mauerwand gerichtet wird.

2. Vorrichtung (1) nach Anspruch 1, **dadurch gekennzeichnet, dass** die besagten Mittel zum Versetzen und Schützen (9) als wenigstens zwei Stangen (13) ausgestaltet sind, die sich in Längsrichtung von dem besagten Rand bis zu den besagten Mitteln zur festen Verbindung (12) erstrecken.

3. Vorrichtung (1) nach Anspruch 2, **dadurch gekennzeichnet, dass** die besagten Stangen (13) parallel zu einander sind.

4. Vorrichtung (1) nach irgendeinem der vorgehenden Ansprüche, **dadurch gekennzeichnet, dass** die besagten Mittel zur festen Verbindung (12) als wenigstens ein Winkeleisen (14) ausgestaltet sind, von dem ein Flügel fest mit dem besagten zweiten Ende verbunden und so geformt ist, dass er an der besagten Mauerwand anliegt.

## Claims

1. Drinking trough device (1) for farm animal, formed of an enclosure comprising, on the one hand, a trough (2) with on top of it a rear wall (3) and a first (4) and a second (5) sidewall extending parallel to each other on both sides of said rear wall (3), an opening (7) being provided for in the front face for the passing through of the animal when it wants to drink and, on the other hand, means (8) for fastening to a wall panel at the level of and along said sidewall (4), wherein the device comprises means (9) for moving away and protecting the rear wall (3) made integral, at a first end (11), with said rear wall (3) at the level of the edge opposite said sidewall (4) and provided, at the second, opposite end, with means (12) for making integral with said wall panel, said means (9) for moving away forming an inclined surface forming a barrier directed from said opposite edge of the rear wall (3) to said wall panel, so as to direct said drinking trough perpendicular with respect to the wall panel.

2. Device (1) according to claim 1, wherein said means for moving away and protecting (9) are in the form of at least two bars (13) extending longitudinally from said edge to said means for making integral (12).

3. Device (1) according to claim 2, wherein said bars (13) are parallel to each other.

4. Device (1) according to any of the preceding claims, wherein said means for making integral (12) are in the form of at least one square iron (14), one wing of which is integral with said second end and shaped so as to be adjacent to said wall panel.
